(19)

Europäisches
Patentamt
European
Patent Office
Office européen
des brevets

(11)  **EP 3 846 262 A1**

(12)  **EUROPEAN PATENT APPLICATION**
published in accordance with Art. 153(4) EPC

(43) Date of publication:
   **07.07.2021 Bulletin 2021/27**

(21) Application number: **19854420.7**

(22) Date of filing: **08.07.2019**

(51) Int Cl.:
   $H01M\ 4/52$ (2010.01)    $C01G\ 53/00$ (2006.01)
   $H01M\ 4/36$ (2006.01)    $H01M\ 4/505$ (2010.01)
   $H01M\ 4/525$ (2010.01)

(86) International application number:
   **PCT/JP2019/026934**

(87) International publication number:
   **WO 2020/044795 (05.03.2020 Gazette 2020/10)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME
   KH MA MD TN**

(30) Priority: **29.08.2018 JP 2018160771**

(71) Applicant: **Tanaka Chemical Corporation
   Fukui-shi, Fukui 910-3131 (JP)**

(72) Inventors:
   • **HANAMURA, Naoya
     Fukui-shi, Fukui 910-3131 (JP)**
   • **TANAKA, Satoshi
     Fukui-shi, Fukui 910-3131 (JP)**
   • **HATA, Mikio
     Fukui-shi, Fukui 910-3131 (JP)**

(74) Representative: **Dey, Michael
   Weickmann & Weickmann
   Patent- und Rechtsanwälte PartmbB
   Postfach 860 820
   81635 München (DE)**

(54)  **POSITIVE ELECTRODE ACTIVE MATERIAL PARTICLES FOR SECONDARY BATTERIES, AND METHOD FOR PRODUCING POSITIVE ELECTRODE ACTIVE MATERIAL PARTICLES FOR SECONDARY BATTERIES**

(57)   The present invention provides a positive electrode active material particle for a secondary battery, having excellent electrical conductivity as the whole positive electrode active material particle for a secondary battery, by which fluctuation of volume resistivity depending on the size of the particle diameter of the positive electrode active material particle for a secondary battery is suppressed, and which forms a particle size distribution width having a predetermined spread, and a method for producing the positive electrode active material particle for a secondary battery. The positive electrode active material particle for a secondary battery is a positive electrode active material particle for a secondary battery, containing a metal and/or a metal compound; and a nickel-containing composite compound, wherein a value of X represented by the following equation (I) is 0.00 or more and 0.08 or less.

$$X = (C - A)/B \qquad (I)$$

wherein A means a molar ratio of an amount of the metal in the metal and/or the metal compound to an amount of metals in the nickel-containing composite compound at a secondary particle diameter where a cumulative volume percentage is 90% by volume (D90) among the positive electrode active material particles for a secondary battery, B means a molar ratio of an amount of the metal in the metal and/or the metal compound to an amount of the metals in the nickel-containing composite compound at a secondary particle diameter where the cumulative volume percentage is 50% by volume (D50) among the positive electrode active material particles for a secondary battery, and C means a molar ratio of an amount of the metal in the metal and/or the metal compound to an amount of the metals in the nickel-containing composite compound at a secondary particle diameter where the cumulative volume percentage is 10% by volume (D10) among the positive electrode active material particles for a secondary battery.

**Description**

Technical Field

The present invention relates to a positive electrode active material particle to be used for a positive electrode in a secondary battery, and particularly relates to a positive electrode active material particle for a secondary battery, which can exhibit an excellent utilization rate due to reduction in volume resistivity, and a method for producing the positive electrode active material particle for a secondary battery.

Background Art

In recent years, secondary batteries have been used in a wide range of fields, such as portable devices, and vehicles using electricity as a power source or using electricity together with another power source. In addition, from the viewpoints of enhancing functions of mobile devices, enhancing power of power sources, and the like, further enhancements in output and improvements in utilization rates have been required in a secondary battery. Accordingly, excellent electrical conductivity has been required in a positive electrode active material for a secondary battery from the viewpoint of further enhancements in the output and improving the utilization rate.

For example, as a method for producing a positive electrode active material for a secondary battery, the positive electrode active material having electrical conductivity, imparting high electrical conductivity to a coated nickel hydroxide particle for an alkaline secondary battery positive electrode active material by controlling a diffusion state of a cobalt salt aqueous solution and an alkali aqueous solution in a suspension liquid obtained by dispersing the nickel hydroxide particle in water to secure the uniformity and adhesiveness of a coating of cobalt hydroxide when a particle surface of the nickel hydroxide particle is coated with cobalt hydroxide in an aqueous solution is proposed (Patent Literature 1). In Patent Literature 1, high electrical conductivity is imparted to the coated nickel hydroxide particle for an alkaline secondary battery positive electrode active material, and an enhancement in the output and an improvement in the utilization rate of an alkaline secondary battery have thereby been achieved.

For example, as the positive electrode active material for a secondary battery, having electrical conductivity, a coated nickel hydroxide particle for an alkaline secondary battery positive electrode active material, wherein the valence number of cobalt in the coating is 2.5 or more, and the amount of the coating peeled when 20 g of the coated nickel hydroxide particle is shaken in an airtight container for 1 hour is 20% by mass or less of the total amount of the coating is proposed (Patent Literature 2). The coated nickel hydroxide particle for an alkaline secondary battery positive electrode active material of Patent Literature 2 like Patent Literature 1 is such that the uniformity and adhesiveness of the coating of cobalt hydroxide are secured, and that high electrical conductivity is imparted to the coated nickel hydroxide particle for an alkaline secondary battery positive electrode active material.

The above-described positive electrode active material particles for a secondary battery, such as the coated nickel hydroxide particles for an alkaline secondary battery positive electrode active material, form a particle size distribution width having a predetermined spread. In producing a positive electrode active material particle for a secondary battery by coating a nickel hydroxide particle to be a core with a cobalt compound, when a positive electrode active material particle for a secondary battery forms a particle size distribution width having a predetermined spread, the coating amount of the cobalt compound is different in some cases depending on the size of the particle diameter of the nickel hydroxide particle. Specifically, when the particle diameter of the nickel hydroxide particle is large, the coating amount of cobalt per mol of nickel which is a constituent of the nickel hydroxide particle is small, and when the particle diameter of the nickel hydroxide particle is small, the coating amount of cobalt per mole of nickel which is a constituent of the nickel hydroxide particle is large.

From those described above, when the coating amount of the cobalt compound is different depending on the size of the particle diameter of the nickel hydroxide particle to be a core, the electrical conductivity thereby fluctuates in some cases depending on the size of the particle diameter of the positive electrode active material particle for an alkaline secondary battery in Patent Literatures 1 and 2. That is, in Patent Literatures 1 and 2, a particle having excellent electrical conductivity and a particle not having excellent electrical conductivity are mixed in some cases in the positive electrode active material particle for an alkaline secondary battery, which forms a particle size distribution width having a predetermined spread. Specifically, when the particle diameter of the nickel hydroxide particle is large, the coating amount of the cobalt compound is lowered, and as a result, the electrical conductivity is reduced. Accordingly, in Patent Literatures 1 and 2, there is room for improvements in the electrical conductivity, and further, there is room for improvements in the utilization rate as the whole positive electrode active material particle for a secondary battery, which forms a particle size distribution width having a predetermined spread.

Document List

Patent Literatures

Patent Literature 1: Japanese Patent Application Publication No. 2012-234819
Patent Literature 2: Japanese Patent Application Publication No. 2014-103127

Summary of Invention

Technical Problem

In consideration of the circumstances, it is an object of the present invention to provide a positive electrode active material particle for a secondary battery, having excellent electrical conductivity as the whole positive electrode active material particle for a secondary battery, by which fluctuation of volume resistivity depending on the size of the particle diameter of the positive electrode active material particle for a secondary battery is suppressed, and which forms a particle size distribution width having a predetermined spread, and a method for producing the positive electrode active material particle for a secondary battery.

Solution to Problem

The gist of the constitution of the present invention is as follows.

[1] A positive electrode active material particle for a secondary battery, containing: a metal and/or a metal compound; and a nickel-containing composite compound, wherein a value of X represented by the following equation (I) is 0.00 or more and 0.08 or less:

$$X = (C - A)/B \qquad (I)$$

wherein A means a molar ratio of an amount of the metal in the metal and/or the metal compound to an amount of metals in the nickel-containing composite compound at a secondary particle diameter where a cumulative volume percentage is 90% by volume (D90) among the positive electrode active material particles for a secondary battery, B means a molar ratio of an amount of the metal in the metal and/or the metal compound to an amount of the metals in the nickel-containing composite compound at a secondary particle diameter where the cumulative volume percentage is 50% by volume (D50) among the positive electrode active material particles for a secondary battery, and C means a molar ratio of an amount of the metal in the metal and/or the metal compound to an amount of the metals in the nickel-containing composite compound at a secondary particle diameter where the cumulative volume percentage is 10% by volume (D10) among the positive electrode active material particles for a secondary battery.
[2] The positive electrode active material particle for a secondary battery according to [1], wherein the metal is at least one selected from the group consisting of Ni, Co, Al, Li, and W, and the metal in the metal compound is at least one selected from the group consisting of Ni, Co, Al, Li, and W.
[3] The positive electrode active material particle for a secondary battery according to [1] or [2], wherein the nickel-containing composite compound contains: Ni; and at least one different kind of metal element selected from the group consisting of Co, Zn, Mg, Al, Mn, and Yb.
[4] The positive electrode active material particle for a secondary battery according to [3], wherein at least part of the different kind of metal element is a solid solution element forming a solid solution with the Ni, and a composition of the Ni based on a total amount of the Ni and the solid solution element of 100 mol% is 55 mol% or more and 99% or less.
[5] The positive electrode active material particle for a secondary battery according to any one of [1] to [4], wherein the metal and/or the metal compound forms a coating of the nickel-containing composite compound.
[6] The positive electrode active material particle for a secondary battery according to any one of [1] to [5], wherein the positive electrode active material particle is for a nickel-hydrogen secondary battery.
[7] The positive electrode active material particle for a secondary battery according to any one of [1] to [4], wherein the metal and/or the metal compound contains Li, and at least part of the Li is impregnated in the nickel-containing composite compound.
[8] The positive electrode active material particle for a secondary battery according to [1], [2], [3], [4], or [7], wherein the positive electrode active material particle is for a lithium secondary battery.

[9] The positive electrode active material particle for a secondary battery according to any one of [1] to [8], wherein a value of Y represented by the following equation (II) is 0.80 or more and 1.20 or less:

$$Y = (D90 - D10)/D50 \qquad (II):$$

wherein D90 means the secondary particle diameter where the cumulative volume percentage is 90% by volume among the positive electrode active material particles for a secondary battery, D50 means the secondary particle diameter where the cumulative volume percentage is 50% by volume among the positive electrode active material particles for a secondary battery, and D10 means the secondary particle diameter where the cumulative volume percentage is 10% by volume among the positive electrode active material particles for a secondary battery.

[10] A positive electrode for a secondary battery, using the positive electrode active material particle for a secondary battery according to any one of [1] to [9].

[11] A secondary battery using the positive electrode for a secondary battery according to [10].

[12] A method for producing a positive electrode active material particle for a secondary battery, including:

a step of preparing a nickel-containing composite compound;
a step of classifying the nickel-containing composite compound prepared, thereby obtaining a plurality of classified products of the nickel-containing composite compound;
a step of adding a raw material for a metal and/or a metal compound to a plurality of the classified products; and
a step of putting a plurality of the classified products into one.

In an aspect of [1], the nickel-containing composite compound is a particle derived from a precursor for the positive electrode active material particle for a secondary battery, and in terms of the molar ratio of the amount of the metal in the metal and/or the metal compound to the amount of the metals in the nickel-containing composite compound, the value of the molar ratio of (the molar ratio at D10 - the molar ratio at D90)/the molar ratio at D50 is controlled in the range of 0.00 or more and 0.08 or less. Accordingly, the molar ratio of the amount of the metal in the metal and/or the metal compound to the amount of the metals in the nickel-containing composite compound is uniformized irrespective of the size of the particle diameter of the positive electrode active material particle for a secondary battery.

Effects of Invention

According to aspects of a positive electrode active material particle for a secondary battery of the present invention, the molar ratio of the amount of the metal in the metal and/or the metal compound to the amount of the metals in the nickel-containing composite compound is uniformized irrespective of the size of the particle diameter of the positive electrode active material particle for a secondary battery, and therefore a positive electrode active material particle for a secondary battery, having excellent electrical conductivity as the whole positive electrode active material particle for a secondary battery by which fluctuation of volume resistivity depending on the size of the particle diameter of the positive electrode active material particle for a secondary battery is suppressed, and which forms a particle size distribution width having a predetermined spread, can be obtained. In addition, according to the aspects of the positive electrode active material particle for a secondary battery of the present invention, the positive electrode active material particle for a secondary battery has excellent electrical conductivity, and therefore the output and utilization rate of a secondary battery can further be improved.

Further, according to the aspects of the positive electrode active material particle for a secondary battery of the present invention, the positive electrode active material particle for a secondary battery has a particle size distribution width such that a value of Y represented by equation (II) Y = (D90 - D10)/D50 is 0.80 or more and 1.20 or less, and the tap density and bulk density of the positive electrode active material particle for a secondary battery are thereby improved, so that the output and utilization rate of a secondary battery can be improved further surely, and the charge/discharge characteristics as the whole positive electrode active material particle for a secondary battery can be uniformized more.

Brief Description of Drawings

[FIG. 1] Graphs showing particle size distribution widths of composite hydroxide particles of Example 1 and Comparative Example 1.

[FIG. 2] Graphs showing particle size distribution widths of composite hydroxide particles of Example 2 and Comparative Example 2.
[FIG. 3] Graphs showing particle size distribution widths of composite hydroxide particles of Example 3 and Comparative Example 3.

Description of Embodiments

Hereinafter, details of a positive electrode active material particle for a secondary battery of the present invention will be described. The positive electrode active material particle for a secondary battery of the present invention is a positive electrode active material particle for a secondary battery, containing: a metal and/or a metal compound; and a nickel-containing composite compound. The positive electrode active material particle for a secondary battery of the present invention is a particle such that the metal/and or the metal compound is further provided in the inner portion/and or at the surface portion of the nickel-containing composite compound which is a particle derived from a precursor for a positive electrode active material for a secondary battery.

Examples of the shape of the positive electrode active material particle for a secondary battery of the present invention include, but not particularly limited to, an approximately spherical shape. The positive electrode active material particle for a secondary battery of the present invention has an aspect of a secondary particle formed in such a way that a plurality of primary particles aggregate.

Examples of the positive electrode active material particle for a secondary battery of the present invention include an aspect such that the nickel-containing composite compound which is a particle derived from a precursor for a positive electrode active material for a secondary battery is coated with the metal and/or the metal compound, and an aspect such that a metal-containing compound which is different from the nickel-containing composite compound is reacted with the precursor for a positive electrode active material for a secondary battery, so that the nickel-containing composite compound which is a particle derived from the precursor holds the metal and/or the metal compound derived from the metal-containing compound. In the aspect such that the nickel-containing composite compound is coated with the metal and/or the metal compound, the nickel-containing composite compound forms a core, and the metal and/or the metal compound forms a coating film (shell) that coats the core. Examples of the aspect such that the nickel-containing composite compound holds the metal and/or the metal compound derived from the metal-containing compound include an aspect such that at least part of the metal and/or the metal compound derived from the metal-containing compound is impregnated in the nickel-containing composite compound.

The positive electrode active material particle for a secondary battery of the present invention forms a particle size distribution width having a predetermined spread. Further, in the positive electrode active material particle for a secondary battery, a value of X represented by the following equation (I) is controlled to 0.00 or more and 0.08 or less.

$$X = (C-A)/B \qquad (I)$$

wherein A means a molar ratio of an amount of the metal in the metal and/or the metal compound to an amount of metals in the nickel-containing composite compound at a secondary particle diameter where a cumulative volume percentage is 90% by volume (hereinafter, sometimes simply referred to as "D90") among the positive electrode active material particles for a secondary battery, B means a molar ratio of an amount of the metal in the metal and/or the metal compound to an amount of the metals in the nickel-containing composite compound at a secondary particle diameter where the cumulative volume percentage is 50% by volume (hereinafter, sometimes simply referred to as "D50") among the positive electrode active material particles for a secondary battery, and C means a molar ratio of an amount of the metal in the metal and/or the metal compound to an amount of the metals in the nickel-containing composite compound at a secondary particle diameter where the cumulative volume percentage is 10% by volume (hereinafter, sometimes simply referred to as "D10") among the positive electrode active material particles for a secondary battery.

From those described above, the ratio of the number of moles of the metal in the metal and/or the metal compound, which is further provided on the nickel-containing composite compound, to the number of moles of the metals in the nickel-containing composite compound in the positive electrode active material particle for a secondary battery of the present invention is uniformized irrespective of the size of the particle diameter of the positive electrode active material particle for a secondary battery. Specifically, the respective ratios at D10, D50, D90 of the positive electrode active material particle for a secondary battery are uniformized, and the ratio of the difference between the ratio at D10 and the ratio at D90 to the ratio at D10 is controlled to 0.00 or more and 0.08 or less. It is to be noted that D10, D50, and D90 mean particle diameters measured using a laser diffraction/scattering method with a particle size distribution measurement apparatus.

Since the molar ratio of the amount of the metal in the metal and/or the metal compound to the amount of the metals in the nickel-containing composite compound is uniformized irrespective of the size of the particle diameter of the positive electrode active material particle for a secondary battery, a positive electrode active material particle, having excellent electrical conductivity as the whole positive electrode active material particle for a secondary battery, by which fluctuation of volume resistivity depending on the size of the particle diameter of the positive electrode active material particle for a secondary battery is suppressed, and which forms a particle size distribution width having a predetermined spread, can be obtained. In addition, according to the aspects of the positive electrode active material particle for a secondary battery of the present invention, the positive electrode active material particle for a secondary battery of the present invention has excellent electrical conductivity, and therefore the output and utilization rate of a secondary battery can further be improved.

The value of X in equation (I) is not particularly limited as long as the value is 0.00 or more and 0.08 or less, and it is preferable that the value of X be closer to 0, and, for example, it is preferable that the lower limit value of the X be 0.01 from the viewpoint of easiness of production. It is preferable that the upper limit value of X be 0.07, and particularly preferably 0.05 from the viewpoint of obtaining more excellent electrical conductivity as the whole positive electrode active material particle for a secondary battery, which forms a particle size distribution width having a predetermined spread. The above-described lower limit values and upper limit values can optionally be combined.

The particle size distribution width of the positive electrode active material particle for a secondary battery of the present invention is not particularly limited and has a predetermined spread. It is preferable that the particle size distribution width of the positive electrode active material particle for a secondary battery of the present invention have a broad particle size distribution width such that, for example, a value of Y represented by the following equation (II) is 0.80 or more and 1.20 or less.

$$Y = (D90 - D10)/D50 \qquad (II)$$

When the positive electrode active material particle for a secondary battery has a broad particle size distribution width described above, the tap density and bulk density of the positive electrode active material particle for a secondary battery are thereby improved, that is, the filling density is improved at the time of filling the positive electrode active material particle for a secondary battery, and therefore the output and utilization rate of a secondary battery can surely be improved and the charge/discharge characteristics as the whole positive electrode active material particle for a secondary battery can be uniformized more.

The lower limit value of the particle size distribution width (Y) is more preferably 0.85, and particularly preferably 0.90 from the viewpoint that the filling density of the positive electrode active material particle for a secondary battery is further improved. On the other hand, the upper limit value of the particle size distribution width (Y) is more preferably 1.10, and particularly preferably 1.00 from the viewpoint of further uniformizing the charge/discharge characteristics as the whole positive electrode active material particle for a secondary battery. The above-described lower limit values and upper limit values can optionally be combined.

D50 of the positive electrode active material particle for a secondary battery of the present invention is not particularly limited, but for example, it is preferable that the lower limit value of D50 be 9.0 μm, and particularly preferably 10.0 μm from the viewpoint of improving the filling density of the positive electrode active material particle for a secondary battery. On the other hand, it is preferable that the upper limit value of D50 of the positive electrode active material particle for a secondary battery be 12.0 μm, and particularly preferably 11.0 μm from the viewpoint of securing the contact surface with an electrolytic solution. It is to be noted that the above-described lower limit values and upper limit values can optionally be combined. D10 of the positive electrode active material particle for a secondary battery of the present invention is not particularly limited, but for example, it is preferable that the lower limit value of D10 be 3.0 μm, and particularly preferably 4.0 μm from the viewpoint of improving the filling density of the positive electrode active material particle for a secondary battery. On the other hand, it is preferable that the upper limit value of D10 of the positive electrode active material particle for a secondary battery be 8.0 μm, and particularly preferably 6.0 μm from the viewpoint of securing the contact surface with an electrolytic solution. It is to be noted that the above-described lower limit values and upper limit values can optionally be combined. D90 of the positive electrode active material particle for a secondary battery of the present invention is not particularly limited, but for example, it is preferable that the lower limit value of D90 be 13.0 μm, and particularly preferably 15.0 μm from the viewpoint of improving the filling density of the positive electrode active material particle for a secondary battery. On the other hand, it is preferable that the upper limit value of D90 of the positive electrode active material particle for a secondary battery be 22.0 μm, and particularly preferably 20.0 μm from the viewpoint of securing the contact surface with an electrolytic solution. It is to be noted that the above-described lower limit values and upper limit values can optionally be combined.

When the metal component of the nickel-containing composite compound which is a particle derived from the precursor for a positive electrode active material particle for a secondary battery contains nickel (Ni), the different kind of metal element other than nickel (Ni) can appropriately be selected according the usage condition of the positive electrode active material particle for a secondary battery, and examples of the different kind of metal element include transition metal elements such as cobalt (Co), zinc (Zn), magnesium (Mg), aluminum (Al), manganese (Mn), and ytterbium (Yb). In addition, at least part of the different kind of metal element may be a solid solution element forming a solid solution with nickel (Ni). The proportion of nickel (Ni) based on the total of the different kind of metal element and nickel (Ni) which form a solid solution of 100 mol% can appropriately be selected according to the usage condition of the positive electrode active material particle for a secondary battery and is, for example, 50 mol% or more and 99 mol% or less.

The positive electrode active material particle for a secondary battery of the present invention can be used as a positive electrode active material in every secondary battery, and for example, when the positive electrode active material particle for a secondary battery of the present invention is used as a positive electrode active material in a nickel-hydrogen secondary battery, a positive electrode active material particle for a secondary battery, such that the surface of the nickel-containing composite compound is coated with a layer of the metal and/or the metal compound, can be used. Examples of the metal component in the nickel-containing composite compound include nickel (Ni), cobalt (Co), zinc (Zn), magnesium (Mg), aluminum (Al), and manganese (Mn). Examples of the nickel-containing composite compound include a hydroxide, an oxyhydroxide, and an oxide containing the metal component.

When the positive electrode active material particle for a secondary battery of the present invention is used as a positive electrode active material in a lithium secondary battery, a positive electrode active material particle for a secondary battery, such that at least part of the metal and/or the metal compound derived from the metal-containing compound is held by the nickel-containing composite compound in a state where the at least part of the metal and/or the metal compound is impregnated in the nickel-containing composite compound, can be used. Examples of the metal component in the nickel-containing composite compound include nickel (Ni), cobalt (Co), zinc (Zn), and manganese (Mn). Examples of the nickel-containing composite compound include an oxide containing the metal component.

The metal component in the metal and/or the metal compound which is further provided in the inner portion and/or at the surface portion of the nickel-containing composite compound can appropriately be selected according to the usage condition of the positive electrode active material particle for a secondary battery, and examples of the metal component include metal elements such as nickel (Ni), cobalt (Co), aluminum (Al), lithium (Li), and tungsten (W).

When the positive electrode active material particle for a secondary battery of the present invention is used as a positive electrode active material in a nickel-hydrogen secondary battery, examples of the metal component in the metal and/or the metal compound include cobalt (Co). Examples of the metal compound include cobalt hydroxide, and cobalt oxyhydroxide.

When the positive electrode active material particle for a secondary battery of the present invention is used as a positive electrode active material in a lithium secondary battery, examples of the metal component in the metal and/or the metal compound include lithium (Li). Examples of the metal compound include lithium hydroxide and lithium carbonate.

The tap density (TD) of the positive electrode active material particle for a secondary battery of the present invention is not particularly limited, but it is preferable that the tap density (TD) of the positive electrode active material particle for a secondary battery of the present invention be 1.5 g/cm$^3$ or more, and particularly preferably 1.7 g/cm$^3$ or more from the viewpoint of improving the degree of filling to a positive electrode when the positive electrode active material particle for a secondary battery of the present invention is used as a positive electrode active material.

The balk density (BD) of the positive electrode active material particle for a secondary battery of the present invention is not particularly limited, but for example, it is preferable that the balk density (BD) of the positive electrode active material particle for a secondary battery of the present invention be 0.8 g/cm$^3$ or more, and particularly preferably 1.0 g/cm$^3$ or more from the viewpoint of improving the degree of filling to a positive electrode when the positive electrode active material particle for a secondary battery of the present invention is used as a positive electrode active material.

The BET specific surface area of the positive electrode active material particle for a secondary battery of the present invention is not particularly limited, but for example, it is preferable that the lower limit value be 0.1 m$^2$/g, and particularly preferably 0.5 m$^2$/g, and the upper limit value be 30.0 m$^2$/g, and particularly preferably 25.0 m$^2$/g from the viewpoint of balance between improving the density and securing the contact surface with an electrolytic solution. It is to be noted that the above-described lower limit values and upper limit values can optionally be combined.

Thereafter, examples of a method for producing a positive electrode active material particle for a secondary battery of the present invention will be described. Description will be made herein taking the positive electrode active material particle for a secondary battery, to be used as a positive electrode active material in a nickel-hydrogen secondary battery, and the positive electrode active material particle for a secondary battery, to be used as a positive electrode active material in a lithium secondary battery, as examples.

Method for Producing Positive Electrode Active Material Particle for Secondary Battery, to Be Used as Positive Electrode Active Material in Nickel-Hydrogen Secondary Battery

For example, a composite hydroxide particle (hereinafter, sometimes simply referred to as "composite hydroxide particle") having nickel as an essential metal element, and different kinds of metals such as cobalt, magnesium, and zinc as optional components is first prepared. The composite hydroxide particle is a precursor for a positive electrode active material for a nickel-hydrogen secondary battery. With respect to the method for preparing the composite hydroxide particle, a solution of a salt of nickel (for example, sulfate salt solution), solutions of a salt of the different kinds of metals (for example, a solution of a salt of cobalt (for example, sulfate salt solution),a solution of a salt of magnesium (for example, sulfate salt solution), a solution of a salt of zinc (for example, sulfate salt solution)), a complexing agent, and a pH modifier are appropriately added in the first place and thereby reacted in a reaction tank by a co-precipitation method to prepare a composite hydroxide particle, thereby obtaining suspended matter in the form of slurry containing the composite hydroxide particle. As a solvent for the suspended matter, water for example is used.

The complexing agent is not particularly limited as long as it is a substance capable of forming a complex with nickel and ions of the different kinds of metals in an aqueous solution, and examples of the complexing agent include ammonium ion-supplying bodies (such as ammonium sulfate, ammonium chloride, ammonium carbonate, and ammonium fluoride), hydrazine, ethylenediaminetetraacetic acid, nitrilotriacetic acid, uracildiacetic acid, and glycine. It is to be noted that if necessary, an alkali metal hydroxide (for example, sodium hydroxide or potassium hydroxide) may be added in order to adjust the pH value of the aqueous solution in precipitation.

When the complexing agent in addition to the salt solutions is supplied into the reaction tank in a continuous manner, nickel and the different kinds of metals undergo a coprecipitation reaction, so that the composite hydroxide particle is produced. In the co-precipitation reaction, the substances in the reaction tank are appropriately stirred while the temperature of the reaction tank is being controlled, for example, in a range of 10°C to 80°C, preferably in a range of 20 to 70°C, and the pH value in the reaction tank is being controlled, for example, in a range of pH 9 to pH 13, and preferably in a range of pH 11 to 13 at a liquid temperature of 25°C as a standard. Examples of the reaction tank include a continuous type of allowing the formed hydroxide particle containing nickel to overflow in order to separate the formed hydroxide particle containing nickel.

By subjecting the composite hydroxide particle and the like in the state of suspended matter obtained in the manner as described above to filtration, and then performing washing with water and a heating treatment, the composite hydroxide particle in the form of a powder, which forms a particle size distribution width having a predetermined spread, is obtained. Thereafter, the obtained composite hydroxide particle is classified by a classifier. By the classification operation, the composite hydroxide particle in the form of a powder, which forms a particle size distribution width having a predetermined spread, is classified into, for example, three groups consisting of a composite hydroxide particle of a large particle group of 13 $\mu$m or more and 22 $\mu$m or less, a composite hydroxide particle of a middle particle group of 9 $\mu$m or more and 12 $\mu$m or less, and a composite hydroxide particle of a small particle group of 3 $\mu$m or more and 8 $\mu$m or less. Examples of the classifier include an Elbow-Jet classifier with which particles to be measured are fed by feed air to perform classification. Thereafter, water is added to each of the composite hydroxide particle of the large particle group, the composite hydroxide particle of the middle particle group, and the composite hydroxide particle of the small particle group to make suspended matter containing the composite hydroxide particle of the large particle group, suspended matter containing the composite hydroxide particle of the middle particle group, and suspended matter containing the composite hydroxide particle of the small particle group. Solutions of a salt of the metal (for example, solutions of a salt of Ni, Co, Al, Li, or W), and an alkali solution (such as, for example, sodium hydroxide aqueous solution) are added under stirring with a stirrer to each of these three kinds of suspended matter to form a coating layer of the metal and/or the metal compound on the surface of the composite hydroxide particle by neutralization crystallization. Accordingly, the coating layer of the metal and/or the metal compound is derived from the solutions of the salt of the metal (for example, solutions of the salt of Ni, Co, Al, Li, or W). pH in the step of forming the coating layer is kept, for example, in a range of 9 to 13 at a liquid temperature of 25°C as a standard. By the coating step, the composite hydroxide particle having a coating layer of the metal and/or the metal compound formed thereon can be obtained. The composite hydroxide particle having a coating layer formed thereon can be obtained as suspended matter in the form of slurry.

Thereafter, three kinds of suspended matter containing the composite hydroxide particle having a coating layer formed thereon are put into one and mixed, resultant suspended matter is then separated into a solid phase and a liquid phase, and the solid phase separated from the liquid phase is dried, and the positive electrode active material particle for a secondary battery, to be used as a positive electrode active material in a nickel-hydrogen secondary battery, can thereby be produced. It is to be noted that if necessary, an oxidation treatment may be performed on the composite hydroxide particle having a coating layer formed thereon. Examples of the oxidation treatment include a method in which an alkali solution such as a sodium hydroxide aqueous solution is added after the separation into the solid phase and the liquid phase to the composite hydroxide particle having a coating layer formed thereon, and a resultant mixture is mixed and heated, and a method in which the three kinds of suspended matter containing the composite hydroxide particle having a coating layer formed thereon are put into one and mixed, and then contacted with an oxidation catalyst to supply air into suspension while the suspension is being stirred. Each of three kinds of suspended matter is separated into a solid phase and a liquid phase, and the solid phase separated from the liquid phase is dried, and obtained three kinds of dried matter may be put into one and mixed in place of putting the above-described three kinds of suspended matter into one, then separating resultant suspended matter into a solid phase and a liquid phase, and drying the solid phase separated from the liquid phase. It is to be noted that in the classification step, the composite hydroxide particle is classified into three particle groups, the composite hydroxide particle of the large particle group, the composite hydroxide particle of the middle particle group, and the composite hydroxide particle of the small particle group, according to the size of the particle diameter, but if necessary, the composite hydroxide particle may be classified into two particle groups, or four or more particle groups according to the size of the particle diameter.

Method for Producing Positive Electrode Active Material Particle for Secondary Battery, to Be Used as Positive Electrode Active Material in Lithium Secondary Battery

For example, a composite hydroxide particle or a composite oxide particle (hereinafter, sometimes simply referred to as "composite hydroxide particle or the like") having nickel as an essential metal element, and different kinds of metals such as cobalt and manganese as optional components is first prepared. The composite hydroxide particle or the like is a precursor for a positive electrode active material for a lithium secondary battery. With respect to the method for preparing the composite hydroxide particle or the like, a solution of a salt of nickel (for example, sulfate salt solution), a solution of a salt of the different kinds of metals (for example, a solution of a salt of cobalt (for example, sulfate salt solution), a solution of a salt of manganese (for example, sulfate salt solution)), a complexing agent, and a pH modifier are appropriately added in the first place and thereby reacted in a reaction tank by a co-precipitation method to prepare a composite hydroxide particle or the like, thereby obtaining suspended matter in the form of slurry containing the composite hydroxide particle or the like. As a solvent for the suspended matter, water for example is used.

The complexing agent is not particularly limited as long as it is a substance capable of forming a complex with nickel and ions of the different kinds of metals in an aqueous solution, and examples of the complexing agent include ammonium ion-supplying bodies (such as ammonium sulfate, ammonium chloride, ammonium carbonate, and ammonium fluoride), hydrazine, ethylenediaminetetraacetic acid, nitrilotriacetic acid, uracildiacetic acid, and glycine. It is to be noted that if necessary, an alkali metal hydroxide (for example, sodium hydroxide or potassium hydroxide) may be added in order to adjust the pH value of the aqueous solution in precipitation.

When the pH modifier and the complexing agent in addition to the salt solutions are appropriately supplied into the reaction tank in a continuous manner, nickel and the different kinds of metals undergo a coprecipitation reaction, so that the composite hydroxide particle or the like is prepared. In the co-precipitation reaction, the substances in the reaction tank are appropriately stirred while the temperature of the reaction tank is being controlled, for example, in a range of 10°C to 80°C, preferably in a range of 20°C to 70°C, and the pH value in the reaction tank is being controlled, for example, in a range of pH 9 to pH 13, and preferably in a range of pH 11 to pH 13 at a liquid temperature of 40°C as a standard. Examples of the reaction tank include a continuous type of allowing the formed composite hydroxide particle or the like to overflow in order to separate the formed composite hydroxide particle or the like, and a batch type which does not discharge the formed composite hydroxide particle or the like until the completion of the reaction.

By subjecting the composite hydroxide particle or the like in the state of suspension material obtained in the manner as described above to filtration, and then performing washing with water and a heating treatment, the composite hydroxide particle or the like in the form of a powder, which forms a particle size distribution width having a predetermined spread, is obtained. Thereafter, the obtained composite hydroxide particle or the like is classified by a classifier. By the classification operation, the composite hydroxide particle or the like in the form of a powder, which forms a particle size distribution width having a predetermined spread, is classified into, for example, three groups consisting of a composite hydroxide particle or the like of a large particle group of 13 $\mu$m or more and 22 $\mu$m or less, a composite hydroxide particle or the like of a middle particle group of 9 $\mu$m or more and 12 $\mu$m or less, and a composite hydroxide particle or the like of a small particle group of 3 $\mu$m or more and 8 $\mu$m or less. Examples of the classifier include an Elbow-Jet classifier with which particles to be measured are fed by feed air to perform classification. Thereafter, a lithium compound is added to each of the composite hydroxide particle or the like of the large particle group, the composite hydroxide particle or the like of the middle particle group, and the composite hydroxide particle or the like of the small particle group to prepare mixtures of the composite hydroxide particle or the like and the lithium compound. Accordingly, a mixture of the composite hydroxide particle or the like and the lithium compound is prepared for each of the three groups obtained as a result of the classification, thereby obtaining three mixtures. The lithium compound is not particularly limited as long as it is a compound having lithium, and examples of the lithium compound include lithium carbonate and lithium hydroxide.

Thereafter, primary firing is performed on each of the obtained three mixtures. When respective fired products are put into one and mixed after the primary firing, and further, secondary firing is performed, the positive electrode active material particle for a secondary battery, to be used as a positive electrode active material in a lithium secondary battery, can thereby be produced. The lithium compound herein forms the metal and/or the metal compound in the positive electrode active material particle for a secondary battery. Examples of the firing temperature in the primary firing include 700°C to 1000°C, examples of the firing time include 5 hours to 20 hours, and examples of the temperature increasing rate include 50 to 550°C/h. Examples of the atmosphere in the primary firing include, but not particularly limited to, the air and oxygen. Examples of the firing furnace to be used in the primary firing include, but not particularly limited to, a stationary box furnace and a roller heath continuous furnace. Examples of the firing temperature in the secondary firing include 600°C or higher and 900°C or lower, examples of the firing time include 1 to 20 hours, and examples of the temperature increasing rate include 50 to 550°C/h. Examples of the atmosphere in the secondary firing include, but not particularly limited to, the air and oxygen. Examples of the firing furnace to be used in the secondary firing include, but not particularly limited to, a stationary box furnace and a roller heath continuous furnace. After secondary firing is performed on the respective products of the primary firing, respective products of the secondary firing may be put into one and mixed in place of putting the respective products of the primary firing into one and mixing a resultant mixture after the above-described primary firing, and further performing secondary firing. It is to be noted that in the classification step, the composite hydroxide particle or the like is classified into three particle groups, the composite hydroxide particle or the like of the large particle group, the composite hydroxide particle or the like of the middle particle group, and the composite hydroxide particle or the like of the small particle group, according to the size of the particle diameter, but if necessary, the composite hydroxide particle or the like may be classified into two particle groups, or four or more particle groups according to the size of the particle diameter.

Thereafter, a positive electrode using the positive electrode active material particle for a secondary battery of the present invention will be described. The positive electrode is provided with a positive electrode current collector and a positive electrode active material layer using the positive electrode active material particle for a secondary battery of the present invention, the positive electrode active material layer formed on the surface of the positive electrode current collector. The positive electrode active material layer has the positive electrode active material particle for a secondary battery of the present invention, a binder (binding agent), and if necessary, a conductive assistant. The conductive assistant is not particularly limited as long as it can be used for a secondary battery for example, and can appropriately be selected according to the type of secondary battery, and for example, metal cobalt or cobalt oxide can be used in a nickel-hydrogen secondary battery, and a carbon material such as carbon black can be used in a lithium secondary battery. Examples of the binder include, but not particularly limited to, polymer resins such as polyvinylidene fluoride (PVdF), butadiene rubber (BR), polyvinyl alcohol (PVA), carboxymethyl cellulose (CMC), and polytetrafluoroethylene (PTFE), and combinations thereof. The positive electrode current collector is not particularly limited, a belt-shaped member using as a forming material a metal material such as Al, Ni or stainless steel can be used, and examples of the positive electrode current collector include a punching metal, an expanded metal, wire netting, a foamed metal (for example, foamed nickel), a netlike metal fiber fired body, and a metal-plated resin plate.

As a method for producing the positive electrode, for example, a positive electrode active material slurry is first prepared by mixing the positive electrode active material particle for a secondary battery of the present invention, a conductive assistant, a binding agent, and water. Subsequently, after the positive electrode active material slurry is filled in the positive electrode current collector by a known filling method and dried, the positive electrode current collector is pressed/fixed with a press or the like, and the positive electrode can thereby be obtained.

A secondary battery (for example, nickel-hydrogen secondary battery and lithium secondary battery) can be assembled by mounting: a positive electrode using the positive electrode active material particle for a secondary battery, obtained in the manner as described above; a negative electrode provided with a negative electrode current collector and a negative electrode active material layer containing a negative electrode active material, the negative electrode active material layer formed on the surface of the negative electrode current collector; a predetermined electrolytic solution; and a separator by a known method.

Example

Thereafter, Examples of the positive electrode active material particle for a secondary battery of the present invention will be described, but the present invention is not limited to these Examples within a range not exceeding the gist of the present invention.

Production of Positive Electrode Active Material Particle for Secondary Battery of Examples and Comparative Examples

Production of Positive Electrode Active Material Particle for Secondary Battery of Example 1

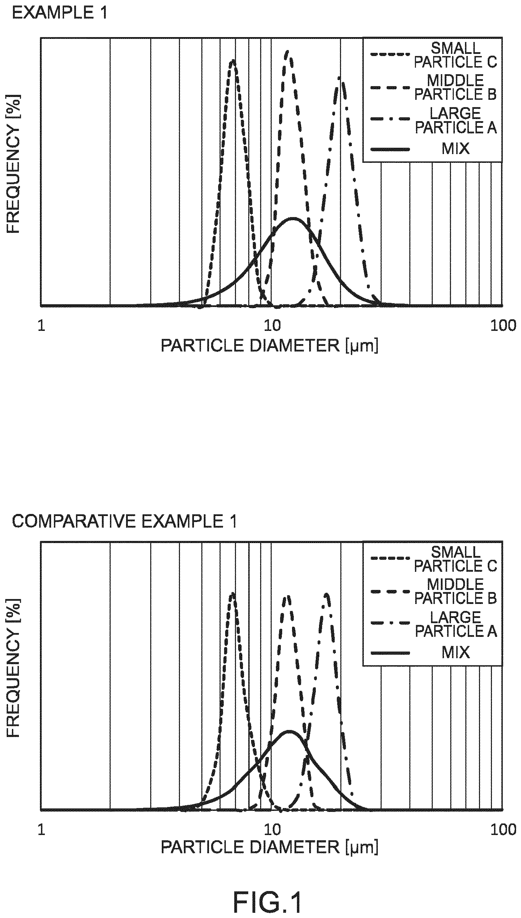

An aqueous solution obtained by dissolving zinc sulfate, cobalt sulfate, and nickel sulfate in a predetermined ratio was stirred continuously with a stirrer while pH in the reaction tank was being kept at 12.0 at a liquid temperature of 25°C as a standard by dropping an ammonium sulfate aqueous solution (complexing agent) and a sodium hydroxide aqueous solution into the aqueous solution. A produced composite hydroxide was allowed to overflow from an overflow pipe of the reaction tank to be taken out. Respective treatments of washing with water, dehydration, and drying were applied to the taken-out composite hydroxide to obtain a nickel-containing composite hydroxide particle, which is shown in FIG. 1, which forms a particle size distribution width having a predetermined spread, which is in the form of a powder, and in which zinc and cobalt form a solid solution with Ni. The composite hydroxide particle is a precursor for a positive electrode active material for a secondary battery. The particle size distribution width shown in FIG. 1 was measured (principle is laser diffraction/scattering method) with a particle size distribution analyzer (LA-950, manufactured by HORIBA, Ltd.).

Thereafter, the obtained composite hydroxide particle was classified with a classifier. By the classification operation, the composite hydroxide particle in the form of a powder, which forms a particle size distribution width shown in FIG. 1 ("MIX" of EXAMPLE 1 in FIG. 1), was classified into three groups consisting of a composite hydroxide particle of a large particle group of 13 $\mu$m or more and 22 $\mu$m or less ("LARGE PARTICLE A" of EXAMPLE 1 in FIG. 1), a composite hydroxide particle of a middle particle group of 9 $\mu$m or more and 12 $\mu$m or less ("MIDDLE PARTICLE B" of EXAMPLE 1 in FIG. 1), and a composite hydroxide particle of a small particle group of 3 $\mu$m or more and 8 $\mu$m or less ("SMALL PARTICLE C" of EXAMPLE 1 in FIG. 1). As the classifier, a classification apparatus (Elbow-Jet classification apparatus EJ-L-3, manufactured by Nittetsu Mining Co., Ltd.) was used to perform the classification setting classifying edge distance M to 47.0 mm, classifying edge distance F to 8.5 mm, and air pressure to 0.5 MPa, and feeding particles to be measured with feed air.

Formation of Coating Layer Containing Cobalt

Thereafter, water was added to each of the composite hydroxide particle of the large particle group, the composite hydroxide particle of the middle particle group, and the composite hydroxide particle of the small particle group to prepare suspend matter containing the composite hydroxide particle of the large particle group, suspended matter containing the composite hydroxide particle of the middle particle group, and suspended matter containing the composite hydroxide particle of the small particle group. These three kinds of suspended matter were put into an alkali aqueous solution in a reaction bath, the alkali aqueous solution having a pH kept in a range of 9 to 13 at a liquid temperature of 25°C as a standard with sodium hydroxide. After the three kinds of suspended matter were put into the alkali aqueous solution, a cobalt sulfate aqueous solution having a concentration of 90 g/L was dropped while the solution was being stirred. A sodium hydroxide solution was appropriately dropped during the dropping to keep pH in the reaction bath in a range of 9 to 13 at a liquid temperature of 25°C as a standard to form a coating layer of cobalt hydroxide on the surface of the composite hydroxide particle, and thus suspensions of nickel-containing composite hydroxide particle which is coated with cobalt hydroxide and in which zinc and cobalt form a solid solution with Ni was obtained.

Oxidation Treatment of Nickel-containing Composite hydroxide Particle Which Is Coated with Cobalt Hydroxide And in Which Zinc And Cobalt Form Solid Solution with Nickel

Thereafter, the three kinds of suspended matter containing the composite hydroxide particle having a coating layer of cobalt hydroxide formed thereon are put into one and mixed, and resultant suspended matter was then separated into a solid phase and a liquid phase. An oxidation treatment such that 10 g of a 48% by mass sodium hydroxide aqueous solution was added to 100 g of the composite hydroxide particle having a coating layer of cobalt hydroxide formed thereon, which was dried after the solid-liquid separation, and a resultant mixture was mixed and then heated at 100°C was performed to obtain a positive electrode active material particle of Example 1, which is for a nickel-hydrogen secondary battery, the positive electrode active material particle having a coating layer of cobalt oxyhydroxide formed thereon. The molar ratio of the amount of the metal in cobalt oxyhydroxide which is a coating layer to the amount of the metals in the nickel-containing composite hydroxide particle in which zinc and cobalt form a solid solution with nickel at D90, D50, and D10 for the obtained positive electrode active material particle of Example 1, which is for a nickel-hydrogen secondary battery, was determined in terms of the molar ratio of the amount (number of moles) of the metal in the metal and/or the metal compound (cobalt oxyhydroxide) which is a coating layer to the amount (number of moles) of the metals in the nickel-containing composite compound (nickel-containing composite hydroxide particle) using the equation of (the molar ratio at D10 - the molar ratio at D90)/ the molar ratio at D50.

Production of Positive Electrode Active Material Particle for Secondary Battery of Comparative Example 1

A positive electrode active material particle for a secondary battery of Comparative Example 1 was produced in the same manner as in Example 1, except that a coating layer containing cobalt was formed without performing the classification operation on the composite hydroxide particle in the form of a powder, which forms a particle size distribution width shown in FIG. 1. The molar ratio of the amount of the metal in cobalt oxyhydroxide which is a coating layer to the amount of the metals in the nickel-containing composite hydroxide particle in which zinc and cobalt form a solid solution with nickel at D90, D50, and D10 for the obtained positive electrode active material particle of Comparative Example 1, which is for a nickel-hydrogen secondary battery, was determined in the same manner as in Example 1.

Production of Positive Electrode Active Material Particle for Secondary Battery of Example 2

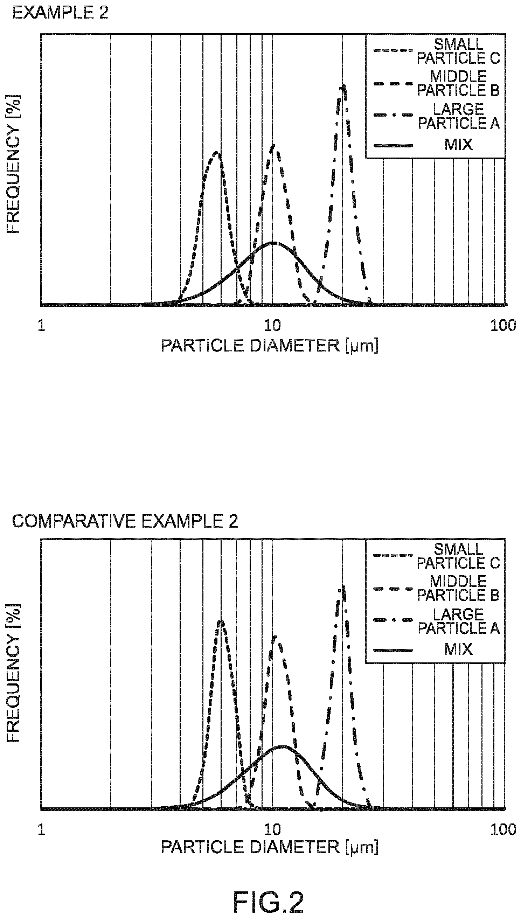

Into an aqueous solution obtained by dissolving manganese sulfate, cobalt sulfate, and nickel sulfate in a predetermined ratio, an ammonium sulfate aqueous solution was dropped, and sodium hydroxide was appropriately dropped in such a way that the reaction pH in the reaction tank became 11.9 at a reaction temperature of 30.0°C and a liquid temperature of 40°C as a standard, thereby obtaining a nickel-containing composite hydroxide in which cobalt and manganese form a solid solution with Ni. This composite hydroxide was allowed to overflow continuously from an overflow pipe of the reaction tank to be taken out, and respective treatments of washing with water after filtration and drying at 100°C were performed to obtain a nickel-containing composite hydroxide particle in which cobalt and manganese form a solid solution with nickel, which forms a particle size distribution width having a predetermined spread, the particle size distribution width shown in FIG. 2, and which is in the form of a powder. The composite hydroxide particle is a precursor for a positive electrode active material for a secondary battery. The particle size distribution width shown in FIG. 2 was measured (principle is laser diffraction/scattering method) with a particle size distribution analyzer (LA-950, manufactured by HORIBA, Ltd.).

Thereafter, the obtained composite hydroxide particle was classified with a classifier. By the classification operation, the composite hydroxide particle in the form of a powder, which forms a particle size distribution width shown in FIG. 2 ("MIX" of EXAMPLE 2 in FIG. 2), was classified into three groups consisting of a composite hydroxide particle of a large particle group of 13 $\mu$m or more and 22 $\mu$m or less ("LARGE PARTICLE A" of EXAMPLE 2 in FIG. 2), a composite hydroxide particle of a middle particle group of 9 $\mu$m or more and 12 $\mu$m or less ("MIDDLE PARTICLE B" of EXAMPLE 2 in FIG. 2), and a composite hydroxide particle of a small particle group of 3 $\mu$m or more and 8 $\mu$m or less ("SMALL PARTICLE C" of EXAMPLE 2 in FIG. 2). As the classifier, a classification apparatus (Elbow-Jet classification apparatus EJ-L-3, manufactured by Nittetsu Mining Co., Ltd.) was used to perform the classification setting classifying edge distance M to 46.0 mm, classifying edge distance F to 9.5 mm, and air pressure to 0.5 MPa, and feeding particles to be measured with feed air.

Thereafter, 200 g of a lithium carbonate powder was added to each of the composite hydroxide particle of the large particle group, the composite hydroxide particle of the middle particle group, and the composite hydroxide particle of the small particle group, which are dried powders, and a resultant mixture was mixed to prepare a mixture of the composite hydroxide particle and lithium carbonate. Accordingly, a mixture of the composite hydroxide particle and lithium carbonate was prepared for each of the three groups obtained as a result of the classification to obtain three mixtures.

Thereafter, primary firing was performed on each of the obtained three mixtures. The firing temperature in the primary firing was set to 740°C, the firing time was set to 8 hours, and the temperature increasing rate was set to 200°C/h, and the air was used as the atmosphere in the primary firing. A box furnace was used as a firing furnace in the primary firing. After the primary firing, the three classified products of the primary firing were put into one and mixed, and further, secondary firing was performed. The firing temperature in the secondary firing was set to 940°C, the firing time was set to 8 hours, the temperature increasing rate was set to 200°C/h, and the air was used as the atmosphere in the secondary firing. A box furnace was used as a firing furnace in the secondary firing. In this way, a positive electrode active material particle for a secondary battery of Example 2, to be used as a positive electrode active material in a lithium secondary battery, in which at least part of lithium is impregnated in the nickel-containing composite oxide particle in which manganese and cobalt form a solid solution with nickel. The molar ratio of lithium to the amount of the metals in the nickel-containing composite oxide particle in which manganese and cobalt form a solid solution with nickel at D90, D50, and D10 for the obtained positive electrode active material particle of Example 2, which is for a nickel-hydrogen secondary battery, was determined in terms of the molar ratio of the amount (number of moles) of the metal in the metal and/or the metal compound (lithium carbonate) to the amount (number of moles) of the metals in the nickel-containing composite compound (nickel-containing composite oxide particle) using the equation of (the molar ratio at D10 - the molar ratio at D90)/ the molar ratio at D50.

Production of Positive Electrode Active Material Particle for Secondary Battery of Comparative Example 2

A positive electrode active material particle for a secondary battery of Comparative Example 2 was produced in the same manner as in Example 2, except that 200 g of the lithium carbonate powder was added to perform the primary firing without performing the classification operation on the composite hydroxide particle in the form of a powder, which forms a particle size distribution width shown in FIG. 2. The molar ratio of lithium to the amount of the metals in the nickel-containing composite oxide particle in which manganese and cobalt form a solid solution with nickel at D90, D50, and D10 for the positive electrode active material particle of Comparative Example 2, which is for a lithium secondary battery, was determined in the same manner as in Example 2.

Production of Positive Electrode Active Material Particle for Secondary Battery of Example 3

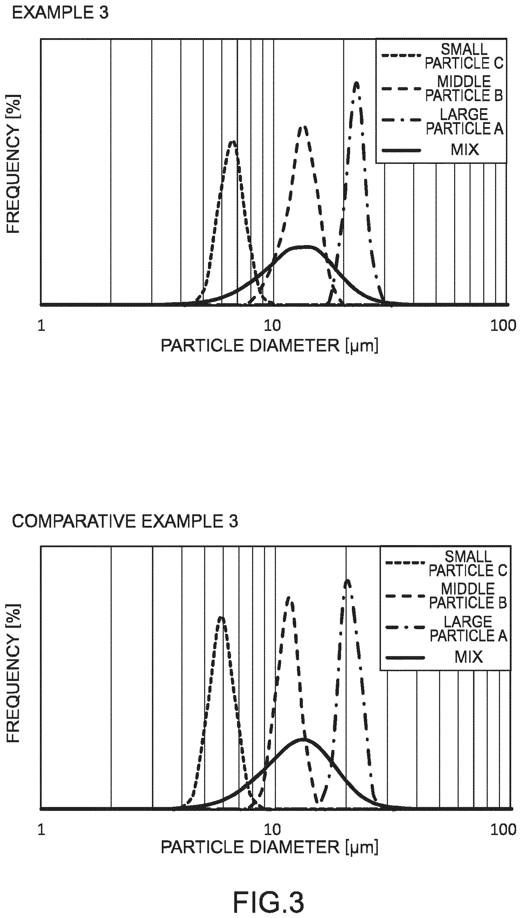

A positive electrode active material particle for a secondary battery of Example 3, to be used as a positive electrode active material in a lithium secondary battery, was produced in the same manner as in Example 2 except that the composite hydroxide particle in the form of a powder, which forms a particle size distribution width shown in FIG. 3 ("MIX" of EXAMPLE 3 in FIG. 3), was used and classified into three groups consisting of a composite hydroxide particle of a large particle group of 13 μm or more and 22 μm or less ("LARGE PARTICLE A" of EXAMPLE 3 in FIG. 3), a composite hydroxide particle of a middle particle group of 9 μm or more and 12 μm or less ("MIDDLE PARTICLE B" of EXAMPLE 3 in FIG. 3), and a composite hydroxide particle of a small particle group of 3 μm or more and 8 μm or less ("SMALL PARTICLE C" of EXAMPLE 3 in FIG. 3) using an aqueous solution obtained by dissolving manganese sulfate, cobalt sulfate, and nickel sulfate in a predetermined ratio. The molar ratio of lithium to the amount of the metals in the nickel-containing composite oxide particle in which manganese and cobalt form a solid solution with nickel at D90, D50, and D10 for the positive electrode active material particle of Example 3, which is for a lithium secondary battery, was determined in the same manner as in Example 2.

Production of Positive Electrode Active Material Particle for Secondary Battery of Comparative Example 3

A positive electrode active material particle for a secondary battery of Comparative Example 3 was produced in the same manner as in Example 3, except that the lithium carbonate powder was added to perform the primary firing without performing the classification operation on the composite hydroxide particle in the form of a powder, which forms a particle size distribution width shown in FIG. 3. The molar ratio of lithium to the amount of the metals in the nickel-containing composite oxide particle in which manganese and cobalt form a solid solution with nickel at D90, D50, and D10 for the positive electrode active material particle of Comparative Example 3, which is for a lithium secondary battery, was determined in the same manner as in Example 2.

The component compositions and the molar ratio of the amount of the metal in the metal and/or the metal compound to the amount of the metals in the nickel-containing composite compound in Examples 1 to 3 and Comparative Examples 1 to 3 are shown in Tables 1 to 3 below.

Items for evaluating the positive electrode active material particles for a secondary battery of Examples 1 to 3 and Comparative Examples 1 to 3 are as follows.

(1) Composition Analysis of Positive Electrode Active Material Particle for Secondary Battery

Composition analysis was performed using an inductivity coupled plasma emission analyzer (Optima 7300 DV, manufactured by PerkinElmer Japan Co., Ltd.) after the obtained positive electrode active material particles are dissolved in hydrochloric acid.

(2) D10, D50, and D90

D10, D50, and D90 were measured (principle is laser diffraction/scattering method) with a particle size distribution analyzer (LA-950, manufactured by HORIBA Ltd.).

(3) BET Specific Surface Area (BET)

The BET specific surface area was measured using a specific surface area measuring apparatus (Macsorb, manufactured by Mountech Co., Ltd.) by a one-point BET method.

(4) Tap Density (TD)

Measurement was performed using Tap Denser (KYT-4000, manufactured by SEISHINE Corporation) by a constant volume measuring method of the methods described in JIS R1628.

(5) Bulk Density (BD)

A sample was naturally dropped to fill a container, and the bulk density was measured from the volume of the container and the mass of the sample.

(6) Volume Resistivity

The volume resistivity (Ω·cm) in Examples 1 to 3 and Comparative Examples 1 to 3 was measured using a powder resistivity measurement system of MCP-PD51 (Loresta), manufactured by Mitsubishi Chemical Analytech Co., Ltd. under the following conditions to calculate the ratio of the volume resistivity in the Examples to the volume resistivity in the Comparative Examples.

Probe used: four-point probe

Electrode interval: 3.0 mm

Radius of electrode: 0.7 mm

Radius of sample: 10.0 mm

Mass of sample: 3.00 g

Applied pressure: 20 kPa

Evaluation results are shown in Tables 1 to 4 below.

[Table 1]

| | | Comparative Example 1 | | | Example 1 | | |
|---|---|---|---|---|---|---|---|
| | | D90 | D50 | D10 | D90 | D50 | D10 |
| Ni | mol% | 87,7 | 86,0 | 82,3 | 86,5 | 86,0 | 85,7 |
| Total Co | mol% | 7,6 | 9,5 | 13,6 | 8,9 | 9,5 | 10,0 |
| Zn | mol% | 4,7 | 4,5 | 4,1 | 4,6 | 4,5 | 4,3 |
| Ni | wt% | 54,2 | 53,3 | 50,7 | 53,5 | 53,4 | 52,8 |
| Total Co | wt% | 4,7 | 5,9 | 8,4 | 5,6 | 5,9 | 6,2 |
| Zn | wt% | 3,2 | 3,1 | 2,8 | 3,2 | 3,1 | 3,0 |
| Co in coating layer | wt% | 1,67 | 2,63 | 4,86 | 2,53 | 2,63 | 2,61 |
| Co in coating layer/Ni + Co + Zn in composite hydroxide | mol ratio | 0.028 (in equation (I) A) | 0.044 (in equation (I) B) | 0.085 (in equation (I) C) | 0.042 (in equation (I) A) | 0.044 (in equation (I) B) | 0.044 (in equation (I) C) |
| D50 | μm | 16,4 | 11,0 | 6,0 | 18,6 | 11,0 | 6,2 |
| BET | m2/g | 7,3 | 8,3 | 10,4 | 7,5 | 6,7 | 9,4 |
| TD | g/ml | 1,95 | 2,04 | 1,54 | 1,94 | 1,87 | 1,67 |
| BD | g/ml | 1,45 | 1,74 | 1,06 | 1,58 | 1,48 | 1,15 |
| (C-A)/B | - | 1,30 | | | 0,05 | | |

[Table 2]

| | | Comparative Example 2 | | | Example 2 | | |
|---|---|---|---|---|---|---|---|
| | | D90 | D50 | D10 | D90 | D50 | D10 |
| Ni | mol% | 54,0 | 48,5 | 43,6 | 53,9 | 48,1 | 42,8 |
| Co | mol% | 19,6 | 20,1 | 19,7 | 19,5 | 20,1 | 19,9 |
| Mn | mol% | 26,4 | 31,4 | 36,7 | 26,6 | 31,8 | 37,3 |
| Ni | wt% | 32,2 | 28,4 | 25,0 | 31,6 | 29,6 | 24,9 |
| Co | wt% | 11,7 | 11,8 | 11,3 | 11,5 | 12,4 | 11,6 |
| Mn | wt% | 14,7 | 17,2 | 19,7 | 14,6 | 18,3 | 20,3 |
| Li | wt% | 6,91 | 7,28 | 7,70 | 7,01 | 7,42 | 7,00 |

(continued)

| | | Comparative Example 2 | | | Example 2 | | |
|---|---|---|---|---|---|---|---|
| | | D90 | D50 | D10 | D90 | D50 | D10 |
| Li/Ni+Co+Mn in composite oxide | mol ratio | 0.98 (in equation (I) A ) | 1.05 (in equation (I) B ) | 1.14 (in equation (I) C ) | 1.01 (in equation (I) A ) | 1.02 (in equation (I) B ) | 1.02 (in equation (I) C ) |
| D50 | μm | 18,4 | 9,2 | 5,3 | 18,7 | 9,1 | 5,2 |
| BET | m2/g | 0,43 | 0,59 | 0,77 | 0,14 | 0,29 | 0,65 |
| TD | g/ml | 2,90 | 2,71 | 2,28 | 2,80 | 2,68 | 2,09 |
| BD | g/ml | 2,52 | 2,02 | 1,48 | 2,46 | 1,71 | 1,16 |
| (C-A)/B | - | 0,15 | | | 0,01 | | |

[Table 3]

| | | Comparative Example 3 | | | Example 3 | | |
|---|---|---|---|---|---|---|---|
| | | D90 | D50 | D10 | D90 | D50 | D10 |
| Ni | mol% | 64,7 | 59,2 | 55,7 | 60,4 | 59,2 | 54,6 |
| Co | mol% | 18,5 | 20,3 | 20,8 | 19,8 | 20,3 | 21,4 |
| Mn | mol% | 16,8 | 20,5 | 23,5 | 19,8 | 20,5 | 24,0 |
| Ni | wt% | 38,3 | 34,6 | 32,3 | 37,1 | 34,2 | 31,1 |
| Co | wt% | 11,0 | 11,9 | 12,1 | 10,5 | 11,8 | 12,2 |
| Mn | wt% | 9,3 | 11,2 | 12,8 | 8,9 | 11,1 | 12,8 |
| Li | wt% | 7,20 | 7,45 | 7,70 | 7,13 | 7,35 | 7,22 |
| Li/Ni+Co+Mn in composite oxide | mol ratio | 1.03 (in equation (I) A) | 1.08 (in equation (I) B) | 1.12 (in equation (I) C) | 1.06 (in equation (I) A) | 1.08 (in equation (I) B) | 1.07 (in equation (I) C) |
| D50 | μm | 19,9 | 11,4 | 5,5 | 20,9 | 12,1 | 6,2 |
| BET | m2/g | 0,13 | 0,22 | 0,55 | 0,16 | 0,21 | 0,49 |
| TD | g/ml | 2,92 | 2,77 | 2,31 | 2,87 | 2,72 | 2,24 |
| BD | g/ml | 2,51 | 2,22 | 1,41 | 2,60 | 2,13 | 1,29 |
| (C-A)/B | - | 0,09 | | | 0,01 | | |

[Table 4]

| | Comparative Example 1 | Example 1 | Comparative Example 2 | Example 2 | Comparative Example 3 | Example 3 |
|---|---|---|---|---|---|---|
| Ratio [%] of volume resistivity [Ω·cm] | 100 | 71,6 | 100 | 95,0 | 100 | 90,4 |

From Table 4, it was found that the volume resistivity can be reduced in Examples 1 to 3 where in terms of the molar ratio of the amount (number of moles) of the metal in the metal and/or the metal compound (cobalt oxyhydroxide in Example 1, and lithium in Examples 2 and 3) to the amount (number of moles) of the metals in the nickel-containing composite compound (nickel-containing composite hydroxide particle in Example 1, and nickel-containing oxide particle in Examples 2 and 3), the value of (the molar ratio at D10 - the molar ratio at D90)/the molar ratio of D50 is controlled in a range of 0.00 or more and 0.08 or less as compared to Comparative Examples 1 to 3 where in terms of the molar ratio of the amount (number of moles) of the metal in the metal and/or the metal compound (cobalt oxyhydroxide in Comparative Example 1, and lithium in Comparative Examples 2 and 3) to the amount (number of moles) of the metals in the nickel-containing composite compound (nickel-containing composite hydroxide particle in Comparative Example 1, and nickel-containing oxide particle in Comparative Examples 2 and 3), the value of (the molar ratio at D10 - the molar ratio at D90)/the molar ratio at D50 is 0.09 or more. Accordingly, it became clear that the positive electrode active material particles of Examples 1 to 3 have excellent electrical conductivity and therefore the output and utilization rate of a secondary battery can further be improved.

From Tables 1 to 3, it also became clear that the tap density (TD) and the bulk density (BD) which are equivalent to those in Comparative Examples 1 to 3 corresponding to conventional positive electrode active material particles for a secondary battery were obtained in Examples 1 to 3 and therefore the positive electrode active material particles for a secondary battery of Examples 1 to 3 can be mounted on a positive electrode with excellent filling density. The particle size distribution width of a composite hydroxide particle or a composite oxide particle which is a precursor for a positive electrode active material particle for a secondary battery almost corresponds to the particle size distribution width of a positive electrode active material particle for a secondary battery, and from FIGs. 1 to 3, it was found that satisfactory tap density (TD) and bulk density (BD) are obtained in Examples 1 to 3 because the value of (D90 - D10)/D50 is 0.80 or more and 1.20 or less for the composite hydroxide particle or the composite oxide particles.

Industrial Applicability

The positive electrode active material particle for a secondary battery of the present invention has excellent electrical conductivity as the whole positive electrode active material particle for a secondary battery, which forms a particle size distribution width having a predetermined spread, therefore can be utilized in a wide range of fields, and has a high utility value in the field of, for example, a secondary battery to be mounted on a portable device or a movable body such as a vehicle, in which further enhancements in the output and improvements in the utilization rate have been required.

**Claims**

1. A positive electrode active material particle for a secondary battery, comprising:

   a metal and/or a metal compound; and
   a nickel-containing composite compound, wherein
   a value of X represented by the following equation (I) is 0.00 or more and 0.08 or less:

$$X = (C - A)/B \qquad (I)$$

   wherein A means a molar ratio of an amount of the metal in the metal and/or the metal compound to an amount of metals in the nickel-containing composite compound at a secondary particle diameter where a cumulative volume percentage is 90% by volume (D90) among the positive electrode active material particles for a secondary battery, B means a molar ratio of an amount of the metal in the metal and/or the metal compound to an amount of the metals in the nickel-containing composite compound at a secondary particle diameter where the cumulative volume percentage is 50% by volume (D50) among the positive electrode active material particles for a secondary battery, and C means a molar ratio of an amount of the metal in the metal and/or the metal compound to an amount of the metals in the nickel-containing composite compound at a secondary particle diameter where the cumulative volume percentage is 10% by volume (D10) among the positive electrode active material particles for a secondary battery.

2. The positive electrode active material particle for a secondary battery according to claim 1, wherein the metal is at least one selected from the group consisting of Ni, Co, Al, Li, and W, and the metal in the metal compound is at least one selected from the group consisting of Ni, Co, Al, Li, and W.

3. The positive electrode active material particle for a secondary battery according to claim 1 or 2, wherein the nickel-containing composite compound comprises: Ni; and at least one different kind of metal element selected from the group consisting of Co, Zn, Mg, Al, Mn, and Yb.

4. The positive electrode active material particle for a secondary battery according to claim 3, wherein at least part of the different kind of metal element is a solid solution element forming a solid solution with the Ni, and a composition of the Ni based on a total amount of the Ni and the solid solution element of 100 mol% is 50 mol% or more and 99% or less.

5. The positive electrode active material particle for a secondary battery according to any one of claims 1 to 4, wherein the metal and/or the metal compound forms a coating of the nickel-containing composite compound.

6. The positive electrode active material particle for a secondary battery according to any one of claims 1 to 5, wherein the positive electrode active material particle is for a nickel-hydrogen secondary battery.

7. The positive electrode active material particle for a secondary battery according to any one of claims 1 to 4, wherein the metal and/or the metal compound comprises Li, and at least part of the Li is impregnated in the nickel-containing composite compound.

8. The positive electrode active material particle for a secondary battery according to claim 1, 2, 3, 4, or 7, wherein the positive electrode active material particle is for a lithium secondary battery.

9. The positive electrode active material particle for a secondary battery according to any one of claims 1 to 8, wherein a value of Y represented by the following equation (II) is 0.80 or more and 1.20 or less:

$$Y = (D90 - D10)/D50 \quad (II):$$

wherein D90 means the secondary particle diameter where the cumulative volume percentage is 90% by volume among the positive electrode active material particles for a secondary battery, D50 means the secondary particle diameter where the cumulative volume percentage is 50% by volume among the positive electrode active material particles for a secondary battery, and D10 means the secondary particle diameter where the cumulative volume percentage is 10% by volume among the positive electrode active material particles for a secondary battery.

10. A positive electrode for a secondary battery, using the positive electrode active material particle for a secondary battery according to any one of claims 1 to 9.

11. A secondary battery using the positive electrode for a secondary battery according to claim 10.

12. A method for producing a positive electrode active material particle for a secondary battery, comprising:

a step of preparing a nickel-containing composite compound;
a step of classifying the nickel-containing composite compound prepared, thereby obtaining a plurality of classified products of the nickel-containing composite compound;
a step of adding a raw material for a metal and/or a metal compound to a plurality of the classified products; and
a step of putting a plurality of the classified products into one.

EXAMPLE 1

COMPARATIVE EXAMPLE 1

FIG.1

EXAMPLE 2

COMPARATIVE EXAMPLE 2

FIG.2

EXAMPLE 3

COMPARATIVE EXAMPLE 3

FIG.3

## INTERNATIONAL SEARCH REPORT

| | International application No. |
|---|---|
| | PCT/JP2019/026934 |

A. CLASSIFICATION OF SUBJECT MATTER
Int.Cl. H01M4/52(2010.01)i, C01G53/00(2006.01)i, H01M4/36(2006.01)i,
H01M4/505(2010.01)i, H01M4/525(2010.01)i

According to International Patent Classification (IPC) or to both national classification and IPC

B. FIELDS SEARCHED

Minimum documentation searched (classification system followed by classification symbols)
Int.Cl. H01M4/52, C01G53/00, H01M4/36, H01M4/505, H01M4/525

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2012/020768 A1 (AGC SEIMI CHEMICAL CO., LTD.)<br>16 February 2012, paragraphs [0001]-[0059],<br>examples<br>(Family: none) | 1-4, 7-11<br>5-6, 12 |
| A | JP 2007-517368 A (LG CHEMICAL LTD.) 28 June 2007<br>& WO 2005/064715 A1 & KR 10-2006-0105039 A & EP<br>1716609 A1 & CN 1902776 A & US 2007/0122705 A1 | 1-12 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 26.09.2019 | 08.10.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2019/026934 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-505733 A (TODA KOGYO EUROPE GMBH) 25 February 2010<br>& WO 2008/043559 A1 & KR 10-2009-0066291 A & EP 2073921 A1 & US 2010/0102282 A1 | 1-12 |
| A | JP 2009-266728 A (TOYOTA MOTOR CORPORATION) 12 November 2009<br>& WO 2009/133443 A1 & KR 10-2010-0139095 A & EP 2272121 A1 & US 2011/0045348 A1 & CN 102017244 A | 1-12 |
| A | WO 2003/003489 A1 (SANTOKU CORPORATION) 09 January 2003<br>& JP 2003-17050 A & CN 1520621 A & KR 10-0934612 B1 | 1-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012234819 A

- JP 2014103127 A